# FASCICULE DE BREVET EUROPEEN

(11) **EP 0 462 899 B1**
(45) Date de publication et mention de la délivrance du brevet: **31.08.1994**
(21) Numéro de dépôt: 91401661.3
(22) Date de dépôt: 19.06.1991
(51) Int. Cl.: E01C 21/00, E01C 19/20, G01G 19/08

(54) **Procédé de contrôle d'épandage de liant et moyens pour la mise en oeuvre du procédé**
Steuerungsverfahren beim Streuen von Bindemittel und Vorrichtungen zur Durchführung des Verfahrens
Method for controlling the spreading of binder and means for carrying out this method

(30) Priorité: 20.06.1990 FR 9007897
(43) Date de publication de la demande: 27.12.1991
(73) Titulaire: RABAUD S.A., 85110 Sainte-Cécile (FR)
(72) Inventeur: Rabaud, Claude, F-85110 Sainte-Cécile (FR)
(74) Mandataire: Phélip, Bruno

(56) Documents cités:
- EP-A- 0 200 281
- FR-A- 746 761
- FR-A- 2 536 771
- GB-A- 2 008 549
- US-A- 4 132 941
- STRASSE UND VERKEHR/ROUTE ET TRAFIC. vol. 61, no. 1, 14 Janvier 1975, ZURICH CH, p. 22 - 23; H.STAMM: "DIE BEHANDLUNG SILTIGER BODEN MIT KALK IN DER BRETAGNE"

## Description

La présente invention concerne un procédé de contrôle d'épandage de liant sur un chantier en vue du traitement du sol, pour la préparation de voies de circulation par exemple, et elle concerne également les moyens pour la mise en oeuvre du procédé.

La stabilisation des sols, sur le bas côté des routes ou pour l'aménagement de voies de circulation sur chantiers ou autres, est obtenue au moyen d'un traitement qui consiste à épandre sur le sol, à sec, une poudre fine pulvérulente de ciment ou de chaux, servant de liant, qui est ensuite malaxée en même temps que le sol au moyen d'engins rotatifs, et éventuellement arrosée afin de transformer l'ensemble en une masse solide.

L'épandage du liant est généralement effectué au moyen d'engins qui déversent la quantité requise sur le sol, comme décrit dans le document FR-A-746 761, en fonction d'un dosage préétabli qui dépend essentiellement de la nature du sol et de la destination de la partie ainsi traitée.

Ces épandeurs doivent réaliser une répartition homogène et régulière du liant à la surface du sol, sans dispersion. Pour obtenir une bonne stabilité du sol, il faut éviter de réaliser des zones avec un excès ou un manque de liant.

Actuellement, les épandeurs n'offrent pas la possibilité de répartir de façon homogène et régulière le liant à la surface du sol à stabiliser. Ces difficultés sont liées pour partie, à la nature même du liant qui est un matériau pulvérulent, dont la densité varie selon les conditions atmosphériques dans des proportions importantes, et aussi au matériel utilisé qui se révèle peu performant.

On a constaté que les variations de dosage étaient très importantes tant en largeur d'épandage que longitudinalement.

Le contrôle de l'épandage est une opération quine peut s'effectuer que ponctuellement par analyse à postériori sur une surface choisie.

Pour obtenir des résultats satisfaisants, les quantités de liant épandu sont la plupart du temps très supérieures aux quantités préétablies ; l'épandage s'effectuant par exemple au moyen de plusieurs passes, sur une même bande de sol à traiter.

La présente invention a pour objet de remédier à ces inconvénients et propose un procédé et des moyens de mise en oeuvre qui permettent un contrôle plus pratique des quantités de liant réellement épandu sur le sol. L'invention permet ainsi de réaliser des économies de temps et aussi de matière grâce à la précision de l'épandage. Le nombre de passes à réaliser peut être prévu à l'avance en fonction du résultat recherché. Le procédé selon l'invention garantit une répartition homogène et régulière à la surface du sol, avec une faible dispersion.

Un autre avantage que présente l'invention réside dans le fait que toutes les informations concernant les opérations d'épandage sont consignées instantanément et peuvent être consultées à tout moment grâce à des moyens d'enregistrement. L'invention évite ainsi les opérations de contrôle à postériori.

Le procédé de contrôle d'épandage de liant, selon l'invention, consiste :
- à peser le chargement de liant avant de commencer l'épandage ;
- à effectuer l'épandage selon des paramètres prédéterminés et notamment : la vitesse d'avancement, la largeur d'épandage, le dosage ou débit de liant, et la nature du liant c'est-à-dire ciment ou chaux ;
- à peser le chargement dès la fin de l'opération d'épandage ;
- à calculer le dosage effectivement réalisé, en poids de liant par unité de surface, de façon à effectuer automatiquement un réajustement à la valeur théorique prévue.

Ce procédé permet ainsi de commencer, lorsque l'on démarre un chantier, par une phase d'étalonnage. L'opérateur prescrit des paramètres moyens et effectue une opération d'épandage en déversant une quantité de liant contrôlée. Les résultats obtenus par le calcul, permettent une modification automatique du débit de liant, en fonction de la dérive des résultats réels obtenus face aux prévisions théoriques. Cette dérive est généralement la conséquence d'une grande variation de la densité du liant.

Toujours selon l'invention, le procédé de contrôle d'épandage consiste à consigner, en mémoire ou sur fiche, pour chaque opération d'épandage, au moins :
- le poids de liant épandu ;
- la surface couverte par le liant ;
- les paramètres affichés au départ et notamment le dosage théorique prévu ;
- le dosage réel effectué lors de l'opération d'épandage.

Selon une autre disposition de l'invention, lors d'une opération de chargement de liant, le procédé consiste :
- en une opération de pesage du chargement de liant non utilisé ;
- en un déverrouillage des moyens permettant l'introduction de liant ;
- en un verrouillage desdits moyens en fin d'opération de chargement ;
- en une nouvelle pesée du chargement et une saisie en mémoire ou sur fiche du poids net de liant introduit dans l'épandeur.

L'invention concerne également les moyens pour la mise en oeuvre du procédé. Ces moyens consistent en un épandeur comprenant une cuve principale de stockage du liant, de grande capacité, munie de moyens d'extraction et d'amenée du liant dans une seconde cuve ou trémie, qui s'étend transversalement par rapport au sens de l'épandage à l'arrière de ladite cuve principale ; cette trémie comprend des moyens de répartition et d'homogénéisation du liant constitués de deux vis sans fin situées au-dessus d'un tambour alvéolaire de distribution du liant, lequel tambour est disposé à la partie inférieure de la trémie, horizontalement et transversalement par rapport au sens d'avancement ; l'ensemble constitué de la cuve principale, de la trémie et du tambour de distribution, est réuni sur un même bâti, de façon monobloc, et ce bâti est porté par un châssis au moyen d'organes de liaison qui comprennent notamment des systèmes de pesée à action temporaire, ou, selon les besoins, à action continue ; lesquels organes de liaison sont constitués de vérins qui déplacent le bâti par rapport au châssis pour les verrouiller ou les déverrouiller l'un par rapport à l'autre, et des capteurs servant de bascules, interposés entre ledit bâti et ledit châssis, opérationnels sous l'effet des vérins, après déverrouillage dudit bâti par rapport au châssis.

Selon une autre disposition de l'invention, la trémie comporte des moyens de détection du niveau de liant, constitués de capteurs qui permettent de déclencher un arrêt de l'épandage en cas de niveau insuffisant et la mise en service de la vis d'alimentation.

Selon une autre disposition de l'invention, la cuve principale comporte des moyens de verrouillage automatique de la conduite d'alimentation en liant, qui interdisent le remplissage si une opération préalable de pesage du chargement n'a pas été effectuée.

Lors des opérations de pesage du chargement on enregistre en fait le poids total de l'ensemble supporté par le bâti y compris ce dernier ; c'est-à-dire que l'on enregistre le poids de la cuve principale, de la trémie, du liant et de tous les accessoires.

Toujours selon l'invention, le remplissage de la cuve principale s'effectue grâce à un transfert du liant par voie pneumatique ; l'évacuation de l'air pulsé est réalisée dans la partie supérieure de la trémie, de préférence au moyen d'une conduite qui aboutit à proximité de l'orifice de remplissage de la cuve principale.

Selon une autre disposition de l'invention, le tambour de distribution est constitué d'alvéoles en matériau plastique évitant tout risque de colmatage. Le carter enveloppant ce tambour comporte, en amont de la paroi inférieure de la trémie, au-dessus des alvéoles vidées, une chambre de mise à l'air libre desdites alvéoles pour faciliter leur remplissage en permettant l'échappement de l'air contenu dans lesdites alvéoles.

Selon une autre disposition de l'invention, l'épandeur comporte un appareil de commande et de contrôle équipé de moyens de saisie, d'enregistrement et éventuellement d'édition des paramètres d'épandage, c'est-à-dire du poids de liant embarqué, du poids de liant épandu, et des moyens de calcul de la surface traitée, du dosage de liant épandu, en poids de liant par unité de surface. Cet appareil de commande et de contrôle de l'épandeur permet également d'adapter le nombre de tours du tambour de distribution et en particulier de corriger ce nombre de tours par un facteur multiplicateur pour compenser un éventuel défaut de remplissage des alvéoles. De même, l'appareil peut opérer une surveillance et enregistrer des incidents tels que des survitesses ou sous-vitesses d'épandage qui risquent d'altérer la qualité de l'épandage.

L'invention sera encore illustrée à l'aide de la description suivante et des dessins annexés, donnés à titre indicatif, et dans lesquels :
- la figure 1 est une vue schématique d'ensemble en coupe longitudinale, de l'épandeur selon l'invention ;
- la figure 2 est une coupe selon 2-2 montrant les organes de liaison entre notamment le bâti de la cuve principale et le châssis de l'épandeur ;
- les figures 3a et 3b montrent respectivement les fiches de contrôle de remplissage et de contrôle d'épandage.

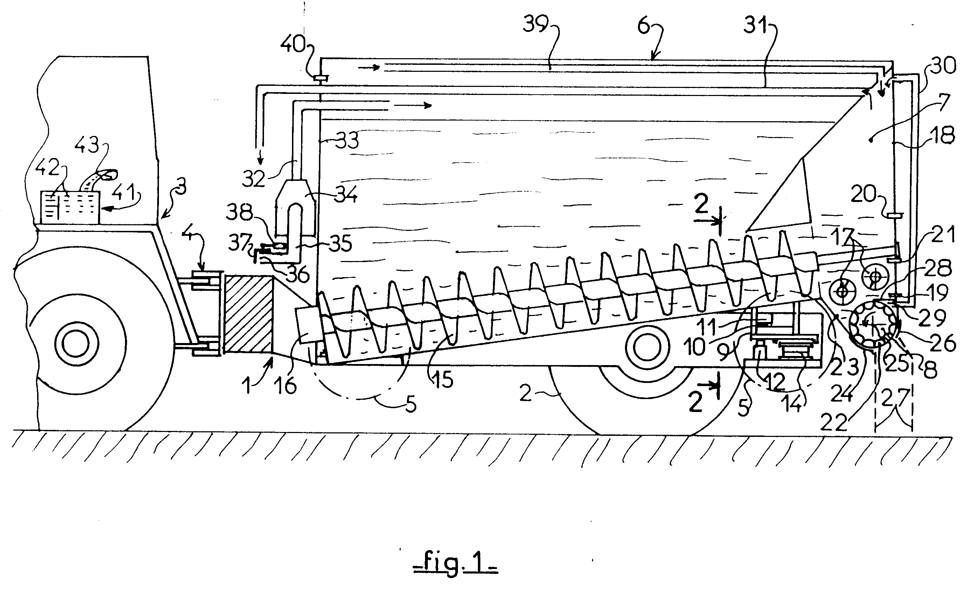

L'épandeur représenté figure 1 est principalement constitué d'un châssis 1 en forme de U disposé dans un plan horizontal, muni, à sa partie arrière, de chaque côté des branches, d'une roue 2. Ce châssis 1 est porté à l'avant par un tracteur 3 à travers un système d'attelage 4. Le châssis 1 supporte à travers les organes de liaison 5, au nombre de quatre, un ensemble constitué d'une cuve principale 6 dans laquelle est stocké le liant, d'une trémie 7 disposée à l'arrière de ladite cuve 6 et à l'extrémité inférieure de laquelle on distingue un rotor de distribution 8.

Cet ensemble constitué de la cuve principale 6, de la trémie 7, et du rotor de distribution 8, est monté sur un bâti 9 ; cet ensemble forme un tout monobloc, solidaire du châssis 1 à travers les organes de liaison 5 que l'on remarque à l'avant et à l'arrière de la cuve 6.

Ces organes de liaison 5 comprennent tout d'abord des moyens de solidarisation active du bâti 9 sur le châssis 1. Ces moyens sont constitués d'une broche 10 solidaire du bâti 9, qui s'engage dans un noyau 11 aménagé sur le chassis 1. Le mouvement du bâti 9 par rapport au chassis 1 est obtenu au moyen d'un vérin 12 logé sous le bâti 9 et posé sur un rebord horizontal 13 du châssis 1. Ce rebord horizontal soutient également un capteur 14, servant de balance, sur lequel le bâti 9 prend appui lorsque le vérin 12 est totalement rétracté.

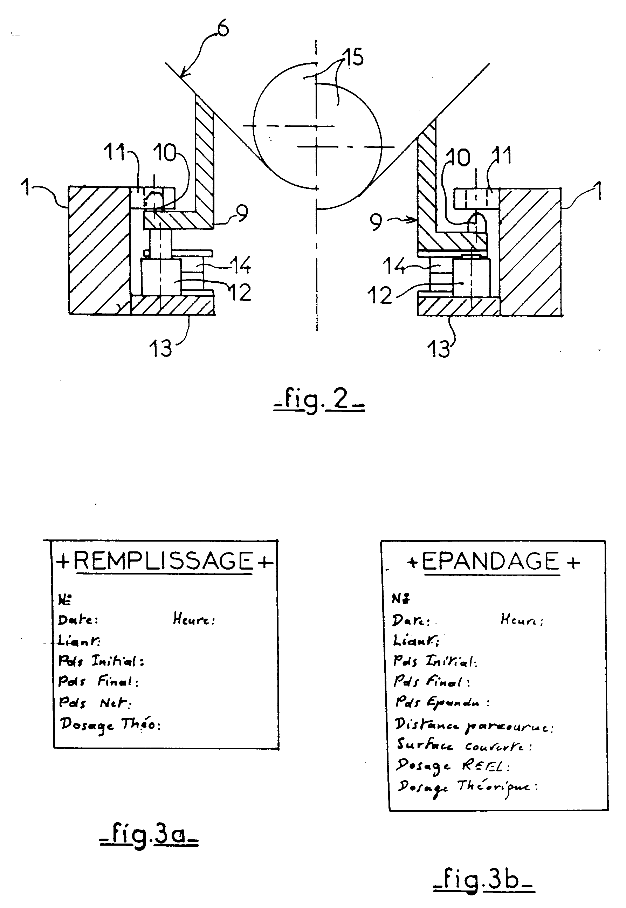

On a représenté, figure 2, côté gauche, le capteur 14 en position inactive, c'est-à-dire que le vérin 12 maintient le bâti 9 verrouillé par rapport au châssis 1. Sur le coté droit, toujours figure 2, le capteur 14 est en position active. On remarque que le vérin 12 est totalement rétracté ; la broche 10 est sortie de son logement dans le noyau 11 ; le bâti 9 repose uniquement sur les capteurs 14.

Les vérins 12 sont au nombre de quatre et sont disposés à proximité des capteurs 14. Lorsque le bâti 9 est en appui sur les capteurs 14, il n'y a aucun autre contact entre le bâti 9 et le châssis 1. Lorsque le bâti 9 est verrouillé dans le châssis 1 par les vérins 12 et les broches 10, une pression est maintenue dans les vérins 12 pour conserver ce verrouillage. Des organes supplémentaires escamotables, du type cheville ou autre peuvent compléter ce verrouillage en cas de non utilisation de l'épandeur.

La cuve 6 comporte un fond incliné qui remonte, de l'avant vers l'arrière. Ce fond, en forme de V, reçoit une vis sans fin 15 qui sert d'extracteur. Cette vis est commandée à l'avant au moyen d'un moteur hydraulique 16 ou autre. La vis sans fin 15 propulse le liant vers la trémie 7, à sa partie inférieure. La trémie 7 s'étend transversalement à l'extrémité arrière de la cuve principale 6. Cette trémie 7 comporte, à sa partie inférieure, deux vis sans fin 17 dont le rôle est de répartir le liant et de l'homogénéiser. Ces deux vis de régulation sont disposées au-dessus du tambour de distribution 8, sous le bout de l'arbre de la vis 15. Elles peuvent être situées dans un plan sensiblement horizontal ou décalées légèrement l'une par rapport à l'autre comme représenté sur la figure 1.

On remarque, sur la paroi arrière 18 de la trémie , des sondes de niveau. Deux sondes 19 au moins sont disposées à la partie inférieure de la trémie 7, au-dessus du tambour de distribution 8, sous les vis 17, de préférence à chaque extrémité dudit tambour 8 de façon à surveiller son alimentation quelle que soit l'inclinaison du terrain notamment. Une autre sonde 20 est disposée au-dessus du niveau d'introduction du liant dans la trémie 7, c'est-à-dire sensiblement au niveau supérieur de l'orifice d'entrée où aboutit la vis 15 de la cuve principale 6. Cette sonde 20 sert à commander l'arrêt de ladite vis 15. Une sonde intermédiaire 21 est interposée entre les niveaux des sondes 19 et 20, disposée en fait au-dessus des vis 17 de répartition, pour commander la mise en service de la vis 15 d'alimentation de la trémie 7.

Le tambour de distribution 8 est constitué d'alvéoles 22 régulièrement réparties sur sa circonférence. Ce tambour peut être constitué, sur sa longueur, de plusieurs alvéoles et même de plusieurs tambours qui permettent de choisir une largeur d'épandage.

Ce tambour 8 est masqué sur une partie de sa circonférence par des écrans ou déflecteurs. Il tourne dans la partie inférieure de la trémie 7 et la paroi inférieure avant 23 de cette trémie se prolonge par un déflecteur 24 qui s'étend jusqu'à l'aplomb de l'axe 25 du tambour 8. On a représenté, sur le tambour, une flèche qui indique son sens de rotation. Le liant qui s'échappe des alvéoles 22 tombe donc grâce au déflecteur 24 à l'aplomb de l'axe 25 du tambour 8. L'ouverture de vidange des alvéoles 22 s'étend sur un arc de cercle qui correspond sensiblement à deux fois la largeur desdites alvéoles 22. Le rotor est masqué, à l'arrière de la trémie 7 par la partie inférieure de la paroi 18 et par un autre déflecteur 26. Les déflecteurs 24 et 26 peuvent avoir une largeur qui correspond à la longueur des alvéoles 22. C'est-à-dire que l'on peut trouver une succession de déflecteurs 24, 26 disposés à la partie inférieure de la trémie 7. Pour éviter une trop grande dispersion du liant lors de l'épandage, des bavettes 27 peuvent être installées sous les déflecteurs 24 et 26 et s'étendre jusqu'au sol.

La cuve 7 comporte, à sa partie interne inférieure, une cloison sensiblement horizontale 28 qui masque les alvéoles 22 vides et qui s'étend depuis la paroi arrière 18 jusqu'à l'aplomb de l'axe 25 du tambour 8. Cette cloison horizontale 28 et la partie inférieure de la paroi 18, définissent une chambre 29 qui s'étend longitudinalement sur une portion de l'enveloppe cylindrique du tambour 8. Cette chambre 29 est reliée par un conduit 30, extérieur à la trémie 7, figure 1, à la partie supérieure de ladite trémie 7. On réalise dans cette chambre 29 une aspiration de l'air de façon à permettre un remplissage plus aisé des alvéoles 22 lorsque ces alvéoles pénètrent dans la trémie 7, au-delà de la cloison horizontale 28. Cette aspiration de l'air s'effectue grâce à une conduite 31 qui met la partie supérieure de la trémie 7 à l'air libre au niveau de la partie avant de la cuve principale 6.

Le remplissage de la cuve principale 6 s'effectue au moyen d'une conduite 32 qui propulse pneumatiquement le liant fluidifié au moyen d'un courant d'air, à l'entrée de ladite cuve 6, au niveau de sa face avant 33. La conduite d'introduction du liant 32 prolonge un caisson 34 qui sert de séparateur à cailloux. Ce caisson 34 est disposé en aval de la conduite d'alimentation 35. Cette conduite d'alimentation 35 comporte, devant son orifice 36 de connexion, des moyens qui contrôlent cette connexion. Ces moyens sont constitués d'un doigt 37 actionné, dans l'exemple représenté, par un vérin 38.

Le liant étant introduit sous pression dans la cuve 6, une conduite 39, disposée en haut de la cuve principale 6, permet une évacuation de l'air depuis l'avant de la cuve 6, au niveau de la paroi 33, vers la partie supérieure de la trémie 7. On obtient ainsi dans la trémie 7 lors du remplissage de la cuve principale 6, une sédimentation des poussières encore en suspension dans l'air d'introduction. Cet air est repris dans la trémie 7 au moyen de la conduite 31 qui débouche à l'avant de la cuve 6 à proximité de la conduite d'alimentation 35. On peut ainsi brancher un autre tuyau, non représenté, d'évacuation ou de reprise de l'air de transport.

On a également représenté, à la partie supérieure de la cloison avant 33 de la cuve 6, une sonde 40 de détection du niveau de liant. Cette sonde 40 se situe à proximité de la paroi supérieure de la cuve 6, en-dessous du niveau de la conduite 39 qui met en communication la partie supérieure avant de la cuve 6 avec la partie supérieure de la trémie 7.

On a également représenté, figure 1, dans le tracteur 3, un appareil de commande et de contrôle 41 installé à proximité de l'opérateur. Cet appareil 41 permet notamment de saisir et de traiter les données fournies par les différents capteurs installés sur l'épandeur. Il comporte des moyens 42 d'affichage des données et de saisie de paramètres et des moyens d'impression de fiches, sur lesquelles sont consignés les paramètres et différentes données de l'épandage.

On a représenté, figure 3a, un exemple de fiches correspondant aux informations imprimées lors de l'opération de remplissage de la cuve principale 6 de l'épandeur. Ces fiches comportent par exemple un numéro d'ordre ainsi qu'une date et l'heure de l'édition de la fiche. Sur cette fiche on consigne le type de liant utilisé : chaux ou ciment par exemple ; on indique également le poids initial relevé au moyen des quatre capteurs 14 interposées entre le bâti 9 et le châssis 1 de l'épandeur ; on indique également le poids relevé à la fin de l'opération de remplissage et le poids net de liant calculé automatiquement par l'appareil 41.

Cette fiche peut également comporter, pour le type de liant chargé dans la cuve 6, le dosage théorique prévu en kilogrammes par m².

La figure 3b représente un modèle de fiche réalisée suite à une opération d'épandage.

Cette fiche peut comporter aussi un numéro d'ordre ainsi que la date de l'opération et son heure d'édition.

On note sur cette fiche le type de liant : chaux ou ciment.

On indique également le poids initial au moment du démarrage de l'opération d'épandage et le poids final lorsque cette opération est terminée.

On indique également le poids étendu par différence des deux données précédentes.

On consigne également sur cette fiche la distance parcourue par l'épandeur pour l'opération en question ainsi que la surface couverte en m². Des moyens permettent le calcul du dosage réel pour la zone considérée, en kilogrammes par m² et on indique également sur la fiche le dosage théorique, c'est-à-dire le dosage tel que calculé et souhaité pour la zone de sol à traiter.

Le remplissage de la cuve principale 6 avec un liant, s'effectue selon une suite d'opérations contrôlées au niveau de l'appareil de commande 41. Ce remplissage s'effectue après une sélection de la procédure de remplissage. Cette procédure de remplissage met hors circuit les moyens, au niveau du tracteur 3, qui permettent l'avancement de l'épandeur. Le déverrouillage de la cuve 6, c'est-à-dire la libération de l'entrée 36 de la tubulure 35 d'introduction de liant, ne se fait qu'après pesage du chargement c'est-à-dire de l'ensemble constitué par la cuve 6, et tous les accessoires solidaires du bâti 9, ainsi que le liant restant dans ladite cuve 6. Ce pesage s'effectue au moyen des capteurs 14. L'opération de pesée est effectuée après un temps de repos et de stabilisation pour obtenir un résultat précis.

L'opération de remplissage peut être effectuée dès le déverrouillage de la conduite d'alimentation 35, lequel déverrouillage s'effectue par un escamotage du doigt 37 qui masque l'orifice d'entrée 36. Ce remplissage s'effectue jusqu'au niveau de la sonde 40, laquelle peut déclencher un témoin sur le tableau d'affichage 42, du genre témoin lumineux ou sonore. Cette sonde 40 peut stopper la procédure de remplissage. Un nouveau pesage du chargement est alors effectué au moyen des capteurs 14.

L'opérateur peut immédiatement éditer une fiche correspondant à la procédure de remplissage, tel que représenté figure 3a. Sur cette fiche on trouvera par exemple la date, l'heure de l'opération de remplissage, le type de liant, le poids initial c'est-à-dire la tare et le poids final d'où l'on déduira le poids du liant introduit réellement dans la cuve 6.

Dès l'opération de remplissage terminée, la cuve 6 est à nouveau verrouillée, c'est-à-dire que l'orifice d'entrée 36 de sa conduite d'alimentation 35 est obturé par le doigt 37, sous l'effet du vérin 38.

A partir de ce moment, le tracteur 4 redevient opérationnel par la remise en circuit de ses moyens d'avancement.

Une indication de fin de procédure de remplissage peut apparaître sur le tableau 42 du boîtier 41 montrant que la procédure de remplissage est inactive.

Les opérations de pesage de l'ensemble supporté par le bâti 9 s'effectuent au moyen des quatre capteurs 14, après escamotage des vérins 12 qui assurent normalement le verrouillage du bâti 9 par rapport au châssis 1.

De la même façon que le remplissage, l'épandage est contrôlé et géré par une procédure au niveau de l'appareil de commande 41.

L'opérateur sélectionne la procédure d'épandage. Cette procédure, dans ses grandes lignes, commence par un pesage du chargement, au moyen des capteurs 14. La vis d'extraction 15 installée en fond de la cuve principale 6 est mise en service au moyen du moteur 16 pour alimenter la trémie 7 sous contrôle des sondes de niveau 20 et 21. L'opérateur fixe, sur l'appareil de commande 41, certains paramètres comme le dosage souhaité, la nature du liant, la largeur d'épandage. Ces paramètres déterminent, automatiquement, le nombre de tours du tambour de distribution 8 et la vitesse d'avancement de l'épandeur. Des alarmes sont prévues pour interrompre la procédure d'épandage en cas de niveau insuffisant dans la trémie 7, détecté par les sondes 19 notamment.

Lorsque la procédure d'épandage est arrêtée, le chargement est à nouveau pesé au moyen des capteurs 14. L'appareil 41 peut alors éditer une fiche selon la figure 3b sur laquelle apparaîtront par exemple, la date et l'heure de l'édition, la nature du liant, le poids initial du chargement au début de la procédure d'épandage, le poids final du chargement, le poids de liant épandu au cours de la procédure en question, la distance parcourue durant cette procédure et la surface couverte, l'appareil effectue le calcul du dosage réel et l'indique à côté du dosage théorique affiché au départ.

L'opérateur et le contrôleur éventuel disposent au moyen de cette fiche d'épandage, de l'ensemble des informations liées à la qualité de cet épandage. L'opérateur peut en déduire la nécessité d'effectuer une nouvelle passe en cas d'épandage insuffisant par rapport au dosage théorique prévu, résultant par exemple d'une différence importante de densité du liant dans la cuve.

En effet, pour des liants du type chaux ou ciment, la densité peut varier du simple au double dans des proportions allant de 0,6 à 1,2.

L'opérateur peut à tout moment interrompre la procédure d'épandage et éditer une fiche de contrôle, ceci après quelques mètres de parcours. Ce test permet notamment à l'appareil 42 d'effectuer automatiquement une correction des paramètres d'épandage de la procédure suivante c'est-à-dire nombre de tours par minute du temps et vitesse d'avancement de l'épandeur.

En dehors des procédures d'épandage ou de remplissage, l'opérateur peut effectuer des procédures de vidange de la cuve principale 6 ou de vidange de la cuve de répartition 7. Ces procédures sont commandées depuis l'appareil 41.

La vitesse de l'épandeur est fonction de plusieurs paramètres. Elle est principalement établie en fonction de la vitesse de rotation du tambour de distribution 8. En effet au-delà d'une vitesse de rotation de l'ordre de 60 tours par minute, on assiste à une centrifugation du liant c'est-à-dire que les alvéoles 22 ne sont pas totalement remplies.

Il peut être pallié à cet inconvénient par une adaptation de la vitesse de rotation du rotor 8 grâce en particulier à un accroissement de cette vitesse. Ainsi, lorsque l'appareil 41 calcule une vitesse pour le rotor de distribution 8, supérieure à 60 tours par minute, il est prévu d'afficher automatiquement une valeur réelle qui correspond à la valeur théorique multipliée par un coefficient correcteur qui permet un accroissement du nombre de tours.

En règle générale, le tambour 8 est maintenu à une vitesse optimale ; le dosage est obtenu par la vitesse d'avancement de l'épandeur. Ainsi, par exemple, avec une vitesse du tambour de 40 tours par minute, on peut doser 60 kg/m² à 1 km/h ou 10 kg/m² à 6 km/h.

Il peut également se produire des incidents temporaires d'épandage au cours d'une procédure comme par exemple une survitesse du tambour de distribution 8 ou une sous vitesse. Ces informations peuvent être saisies et apparaître sur la fiche d'épandage lorsque la durée de ces survitesses ou sous-vitesses dépasse un temps prédéterminé, lequel temps est suffisant pour altérer de façon notable, la qualité de l'épandage.

Ces informations permettent à l'opérateur d'effectuer une correction de l'épandage par une nouvelle passe si le dosage est insuffisant.

Les signes de référence insérés après les caractéristiques techniques mentionnées dans les revendications ont pour seul but de faciliter la compréhension de ces dernières et n'en limitent aucunement la portée.

## Revendications

1. Procédé de contrôle d'épandage de liant du type pulvérulent, sur un chantier de traitement du sol au moyen d'un épandeur, caractérisé en ce qu'il consiste :
- a peser le chargement de liant avant de commencer l'épandage ;
- à effectuer l'épandage selon des paramètres prédéterminés qui sont notamment fonction du liant, du dosage prévu, de la largeur d'épandage, de la vitesse d'avancement ;
- à peser le chargement de liant restant, dès la fin de l'opération d'épandage ;
- à calculer le dosage effectivement réalisé en poids de liant par unité de surface.

2. Procédé de contrôle d'épandage de liant, selon la revendication 1, caractérisé en ce qu'il consiste à consigner, en mémoire ou sur fiche, pour chaque opération d'épandage, au moins :
- le poids de liant épandu ;
- la surface couverte par le liant ;
- les paramètres affichés au départ et notamment le dosage théorique prévu ;
- le dosage réel effectué, en vue d'un réajustement automatique.

3. Procédé de contrôle d'épandage de liant, selon l'une quelconque des revendications 1 ou 2, caractérisé en ce qu'il consiste, lors d'une opération de chargement de liant :
- à peser le chargement de liant restant dans l'épandeur ;
- a effectuer un déverrouillage des moyens permettant l'introduction du liant dans l'épandeur ;
- à effectuer en fin de chargement, un verrouillage desdits moyens d'introduction de liant dans l'épandeur ;
- à peser l ensemble du chargement et à consigner, en mémoire ou sur fiche, le poids de liant introduit dans l'épandeur.

4. Epandeur de liant pour la mise en oeuvre du procédé selon l'une quelconque des revendications 1 à 3, comprenant une cuve principale (6) de grande capacité, pour le stockage du liant, munie de moyens d'extraction en forme de vis sans fin (15), cette vis étant destinée à introduire le liant dans une trémie (7), disposée transversalement par rapport au sens d'épandage, à l'arrière de la cuve principale (6) ; cette trémie (7) comportant des moyens d'homogénéisation du liant comprenant une vis sans fin (17) située dans sa partie inférieure, caractérisé en ce que lesdits moyens d'homogénéisation du liant comportent deux vis sans fin (17) situées dans ladite partie inférieure au-dessus d'un tambour (8) servant à la distribution du liant sur le sol , en ce que l'ensemble constitué de la cuve principale (6), de la trémie (7), et du tambour de distribution (8) est réuni sur un même bâti (9) de façon monobloc, lequel bâti étant porté par un châssis (1), au moyen d'organes de liaison (5) qui comprennent des systèmes de pesée , et en ce que lesquels organes de liaison (5) disposés entre le bâti (9) et le chassis (1), sont constitués de quatre vérins (12) qui déplacent le bâti (9) par rapport au châssis (1) pour les verrouiller ou les déverrouiller l'un par rapport à l'autre, et de quatre capteurs (14) servant de bascules, interposés entre les deux, lesquels capteurs étant opérationnels sous l'effet desdits vérins (12) qui posent l'ensemble du bâti (9) sur lesdits capteurs, après déverrouillage dudit bâti par rapport au châssis.

5. Epandeur selon la revendication 4, caractérisé en ce qu'il comporte, sur la paroi arrière (18) de la trémie (7), des moyens de détection du niveau de liant constitués de deux capteurs inférieurs (19) situés au-dessus du tambour (8), à chaque extrémité et un capteur supérieur (20) situé sensiblement en haut de l'ouverture d'introduction du liant dans la trémie (7) et un capteur intermédiaire (21) ; les capteurs (20 et 21) servant à l'arrêt ou à la mise en marche de la vis d'alimentation (15).

6. Epandeur selon l'une quelconque des revendications 4 ou 5, caractérisé en ce que la cuve principale (6) comporte des moyens de verrouillage automatique de la conduite d'alimentation en liant, qui interdisent le remplissage de ladite cuve si une opération préalable de pesage n'a pas été effectuée, lesquels moyens consistent en un doigt (37) qui obture l'entrée (36) de ladite conduite d'alimentation, lequel doigt (37) est soumis à l'action d'un vérin (38).

7. Epandeur selon l'une quelconque des revendications 4 à 6, caractérisé en ce qu'il comporte une conduite (32) de remplissage de la cuve principale (6) positionnée à la partie supérieure du panneau avant (33) de ladite cuve, le transfert du liant s'effectuant par voie pneumatique ; l'évacuation de l'air pulsé est réalisée dans la partie supérieure de la cuve (6) au moyen d'une conduite qui s'étend de la partie supérieure de la trémie (7) où l'air a été transféré depuis la partie avant de la cuve (6) au moyen d'une conduite (39), jusqu'à l'avant de ladite cuve (6), à proximité de l'orifice d'alimentation.

8. Epandeur selon la revendication 4, caractérisé en ce qu'il comporte un tambour de distribution (8) constitué d'alvéoles (22) en matériau plastique pour éviter tout risque de colmatage.

9. Epandeur selon l'une quelconque des revendications 4 à 8, caractérisé en ce qu'il comporte, autour du tambour de distribution (8), en amont de la paroi inférieure (28) de la trémie (7), au-dessus des alvéoles (22) vidées, une chambre (29) de mise à l'air libre desdites alvéoles afin d'en faciliter le remplissage par le liant.

10. Epandeur selon l'une quelconque des revendications 4 à 9, caractérisé en ce qu'il comporte des moyens de saisie et d'enregistrement du poids de liant embarqué, du poids de liant épandu, et des moyens de calcul de la surface traitée, du dosage de liant épandu en poids de liant par unité de surface.

11. Epandeur selon la revendication 10, caractérisé en ce qu'il comporte des moyens de mémorisation et/ou d'édition sur un support papier ou autre, des valeurs saisies et calculées pour chaque opération liée à l'épandage et/ou au remplissage de la cuve principale (6), en vue du réajustement automatique.

## Claims

1. A method of controlling the spreading of a powder-like binder to be carried out at ground treatment site by means of a spreading device, characterized in that it comprises the steps of :
- weighing the binder load prior to spreading,
- proceeding with the spreading in accordance with predetermined values as related to the type of binder, specified titration, width of spreading, advance speed
- weighing the remaining binder load on said spreading completion
- calculating effective titration by weight of binder per unitary surface

2. The method of claim 1, wherein for each spreading operation shall be recorded, either in a data store or into files, at least :
- the spread binder weight,
- the binder spread surface area,
- the outset displayed values, more particularly the specified theoretical titration,
- the effective titration thereby to provide automatic reassessment.

3. The method of any of claims 1 or 2 wherein, upon loading of binder, the process is characterized in that it comprises the steps of :
- weighing the binder remaining load within the spreading device ;
- unlocking the supply means to enable feeding of binder into the spreading device ;
- locking the said supply means for feeding the binder into the spreding device by the end of loading,
- weighing the total loading and recording, either on a data store or into files, the weight of binder such as fed into the spreading device.

4. Binder spreading device for carrying out the method of any preceding claim comprising a main large storage tank (6) used for storing the binder and provided with collecting means in the form of a feed screw (15), whereby to feed the binder into a hopper (7) which is mounted transversally to the spreading direction, at the rear part of the main tank (6) ; said hopper (7) comprising binder homogenization means including a feed screw (17) provided in lower part thereof, characterized in that said binder homogenization means comprise two feed screws (17) within said lower part thereof above a barrel (8) to be used for spreading the binder to the ground, in that the unit comprised of the main tank (6), hopper (7) and spreading barrel (8) is assembled onto a single structure (9) in one piece, which structure is supportably mounted on a frame (1) by means of connecting members (5) that include weighing systems and in that said connecting members (5) as laid between the structure (9) and frame (1) are comprised of four cylinders (12) whereby the structure (9) is moved relatively to the frame (1) so as to permit both locking and unlocking thereof with respect to one another ; and, interposed therebetween, four sensors (14) used as weighing devices, which sensors are operatively controlled by said cylinders (12), the structure unit (9) being laid thereby onto said sensors after relative unlocking of same with respect to the frame.

5. Spreading device in accordance with claim 4, characterized in that it comprises, at rear wall (18) of the hopper (7), detecting means used to detect the binder level comprised of two lower sensors (19) located above the barrel (8) to each end thereof and a higher sensor (20) located substantially upward the supply hole through which the binder is fed to the hopper (7) and an intermediate sensor (21), both sensors (20 and 21) being used to stop or start the feed screw (15).

6. Spreading device in accordance with any of claims 4 or 5, characterized in that the main tank (6) comprises automatic locking means for automatically locking the binder feed line, whereby said tank filling is prevented unless prior weighing is effected, which means are comprised of a finger (37) to close feed line inlet (36), said finger (37) being controlled by a cylinder (38).

7. A spreading device in accordance with any of claims 4 to 6, characterized in that it comprises a passage (32) to allow filling of the main tank (6) therethrough as being positioned to the upper part of the front wall (33) of said tank, transfer of the binder being made through air pressure ; pulsed air exhaustion is accomplished in the upper part of the tank (6) along a passage which extends from the upper part of the hopper (7) whereto the air was transferred from the front part of the tank (6) along a passage (39) to the front of said tank (6), in the vicinity of the supply hole.

8. A spreading device in accordance with claim 4, characterized in that it comprises a spreading barrel (8) comprised of honeycomb cells (22) made of plastics whereby any clogging risks is avoided.

9. A spreading device in accordance with any of claims 4 to 8, characterized in that it comprises, about the spreading barrel (8), upstreams the lower wall (28) of the hopper (7), above emptied honeycomb cells (22), a venting chamber (29) for the venting of said honeycomb cells so as to facilitate filling thereof by the binder.

10. A spreading device in accordance with any of claims 4 to 9, characterized in that it comprises data input and storage means for recording the weight of aboard binder, the weight of spread binder as well as computation means for computing the treated surface area and titration of spread binder in binder weight per unitary surface.

11. A spreading device in accordance with claim 10, characterized in that it comprises data storage and/or editing means for editing values such as input and computed for each operation relating to the spreading and/or filling of the main tank (6) to provide automatic reassessment.

## Patentansprüche

1. Steuerungsverfahren beim Streuen von pulverigem Bindemittel auf einer Baustelle zur Behandlung des Bodens mit Hilfe einer Streumaschine, dadurch gekennzeichnet, daß es folgende Verfahrensschritte enthält:
- Wiegen der Lademenge des Bindemittels vor dem Beginn des Ausstreuens;
- Durchführen des Streuvorgangs entsprechend vorbestimmten Parametern, die insbesondere Funktion des Bindemittels, der vorgesehenen Dosierung, der Streubreite und der Fahrgeschwindigkeit sind;
- Wiegen der Lademenge des am Ende des Streuvorgangs verbleibenden Bindemittels;
- Errechnung der effektiv verwirklichten Dosierung in Gewichtsanteilen des Bindemittels pro Oberflächeneinheit.

2. Verfahren beim Streuen von Bindemittel nach Anspruch 1, gekennzeichnet durch die Protokollierung, in einem Speicher oder auf einem Karteiblatt, für jede Streuoperation, zumindest folgender Parameter:
- das Gewicht des ausgestreuten Bindemittels;
- die mit dem Bindemittel überdeckte Oberfläche;
- die beim Start angezeigten Parameter und insbesondere die theoretisch vorgesehene Dosierung;
- die real bewirkte Dosierung im Hinblick auf eine automatische Rejustierung.

3. Verfahren beim Streuen von Bindemittel nach einem der Ansprüche 1 oder 2, dadurch gekennzeichnet, daß es bei einer Beladung mit Bindemitteln folgende Verfahrensschritte umfaßt:
- Wiegen der Lademenge an Bindemittel, das in der Streumaschine verbleibt;
- Entriegelung der Einrichtungen, welche eine Einbringung des Bindemittels in die Streumaschine ermöglichen;
- verriegeln der genannten Einrichtungen zur Einbringung des Bindemittels in die Streumaschine am Ende der Beladung;
- Wiegen der Gesamtbeladung und Protokollierung, in einem Speicher oder auf einem Karteiblatt, des Gewichts des in die Streumaschine eingebrachten Bindemittels.

4. Bindemittelstreumaschine zur Durchführung des Verfahrens nach einem der Ansprüche 1 bis 3, umfassend einen Haupttank (6) großen Fassungsvermögens, zur Speicherung des Bindemittels, der mit Extraktionseinrichtungen in Form einer Förderschnecke (15) versehen ist, wobei diese Förderschnecke dazu bestimmt ist, das Bindemittel in einen Trichter einzubringen, der bezogen auf die Ausstreurichtung quer am hinteren Ende des Haupttanks (6) angeordnet ist, wobei dieser, Bindemittelhomogenisiereinrichtungen umfassende Trichter eine Förderschnecke (17) enthält, die in seinem unteren Bereich angeordnet ist, dadurch gekennzeichnet, daß die genannten Bindemittelhomogenisiereinrichtungen zwei Förderschnecken (17) in dem genannten unteren Bereich oberhalb einer Walze (8) umfassen, welche zur Verteilung des Bindemittels auf dem Boden dient, daß die Baugruppe, bestehend aus dem Haupttank (6), dem Trichter (7) und der Verteilwalze (8) auf einem gemeinsamen Rahmen nach Art eines Monoblocks zusammengefaßt ist, wobei der Rahmen vom Chassis (1) mit Hilfe von Verbindungsorganen (5) getragen wird, welche Wiegesysteme enthalten, und daß die genannten Verbindungsorgane (5), die zwischen dem Rahmen (9) und dem Chassis (1) angeordnet sind, aus vier Zylindern (12) bestehen, welche den Rahmen (9) bezüglich des Chassis (1) verstellen, um den einen bezüglich des anderen zu verriegeln oder zu entriegeln, sowie mit vier Meßfühlern (14), die als Waage dienen und zwischen diesen beiden angeordnet sind, wobei die Meßfühler operationsmäßig unter der Wirkung der genannten Zylinder (12) stehen, welche den gesamten Rahmen (9) nach der Entriegelung des Rahmens gegenüber dem Chassis auf den Meßfühlern absetzen.

5. Streumaschine nach Anspruch 4, dadurch gekennzeichnet, daß sie an der Rückwand (18) des Trichters (7) Detektoreinrichtungen zur Feststellung des Niveaus des Bindemittels umfaßt, bestehend aus zwei unteren Meßfühlern (19), die über der Walze (8) an jedem Ende liegen, einem oberen Meßfühler (20), der im wesentlichen oben in der Einführöffnung des Bindemittels in den Trichter (7) liegt, und einen Zwischen-Meßfühler (21), wobei die Meßfühler (20 und 21) zum Anhalten bzw. Inbetriebsetzen der Versorgungsförderschecke (15) dienen.

6. Streumaschine nach Anspruch 4 oder 5, dadurch gekennzeichnet, daß der Haupttank (6) Einrichtungen zur automatischen Verriegelung der Bindemittelzuführleitung aufweist, welche das Füllen des Tanks verhindern, wenn eine vorherige Wiegung nicht stattgefunden hat, wobei diese Einrichtungen einen Zapfen (37) umfassen, der den Eingang (36) der genannten Versorgungsleitung verschließt und der von einem Zylinder (38) betätigt wird.

7. Streumaschine nach einem der Ansprüche 4 bis 6, dadurch gekennzeichnet, daß sie eine Leitung (32) zum Füllen des Haupttanks (6) umfaßt, die am oberen Abschnitt der Vorderwand (33) des genannten Tanks positioniert ist, und wobei der Bindemitteltransport pneumatisch erfolgt, daß die Evakuierung der pulsierenden Luft im oberen Teil des Tanks (6) mit Hilfe einer Leitung realisiert ist, die sich vom oberen Abschnitt des Trichters (7), worin Luft vom vorderen Bereich des Tanks (6) mit Hilfe einer Leitung (39) transferiert worden ist, bis zum vorderen Ende des Tanks (6) in die Nähe der Versorgungsöffnung erstreckt.

8. Streumaschine nach Anspruch 4, dadurch gekennzeichnet, daß sie eine Verteilwalze (8) umfaßt, die aus Zellen aus Plastikmaterial besteht, um jedes Risiko einer Verstopfung zu vermeiden.

9. Streumaschine nach einem der Ansprüche 4 bis 8, dadurch gekennzeichnet, daß sie um die Verteilwalze (8) stromaufwärts der unteren Wand (28) des Trichters (7), über den ausgeleerten Zellen (22) eine Kammer (29) umfaßt, um die Zellen der freien Umgebungsluft auszusetzen zum Zwecke der Vereinfachung der Füllung durch das Bindemittel.

10. Streumaschine nach einem der Ansprüche 4 bis 9, dadurch gekennzeichnet, daß sie Einrichtungen umfaßt zum Erfassen und zur Registrierung des Gewichts des aufgenommenen Bindemittels, des Gewichts des verstreuten Bindemittels und Einrichtungen zur Berechnung der behandelten Fläche, und der Dosierung des verteilten Bindemittels als Bindemittelgewicht pro Oberflächeneinheit.

11. Streumaschine nach Anspruch 10, dadurch gekennzeichnet, daß sie Einrichtungen zur Speicherung und/oder zur Protokollausgabe auf einem Papier od.dgl. der aufgenommenen und errechneten Werte für jeden mit der Verteilung und/oder Füllung des Haupttanks (6) zusammenhängenden Verfahrensschritte im Hinblick auf eine automatische Rejustierung umfaßt.
